# EUROPEAN PATENT APPLICATION

(11) **EP 0 529 284 A2**
(43) Date of publication of application: **03.03.1993**
(21) Application number: 92112269.3
(22) Date of filing: 17.07.1992
(51) Int. Cl.: H04M 11/08, H04N 1/00

(54) **An unidirectional communication system channel selection device and an unidirectional communication system multimedia**

(30) Priority: 31.07.1991 JP 216108/91
(71) Applicant: RICOS CO., LTD., Miyakojima-ku, Osaka (JP)
(72) Inventor: Tsumura, Mihoji, Miyakojima-ku, Osaka (JP)
(74) Representative: Hering, Hartmut, Dipl.-Ing.

(57) **Abstract**

The invention makes use of a known unidirectional communication system in which a specified channel can be selected automatically from a plurality of channels. A channel storage memory (8;29) is used for this purpose which means that, when returning to unidirectional communication following a temporary interruption for the purpose of conversation, the channel stored in this memory (8;29) can be automatically reselected. The invention also enables the selection of a specific channel as a facsimile channel and the subsequent transmission of more than one type of facsimile data along this one channel. For this purpose, the invention incorporates facsimile input and output devices (30,31) and structures data for facsimile transmission in block form, thereby enabling multimedia transmission along a single channel.

## Description

### BACKGROUND OF THE INVENTION:

### 1. FIELD OF THE INVENTION

The invention provides a technique for the automatic specification of a selected channel and for the transmission of more than one channel of facsimile data in a system in which different types of data are transmitted in one direction only (defined as an unidirectional communication system) by making use of the time on an existing telephone line facility when said facility is not being used for speech communication purposes.

### 2. DESCRIPTION OF THE PRIOR ART

Systems for unilateral communication on a telephone line are already known. A system of this type normally involves the establishment in a center independent of the telephone exchange of a center unit for the transmission of data such as speech or music data, and the establishment in said telephone exchange of an exchange unit to switch selectively between the exchange switching system and said center unit in order to connect them to the telephone network. Thus, when the telephone receiver is lifted off the hook in a user's home, the exchange unit is switched to the exchange switching system to enable speech communication. Similarly, when the telephone receiver is placed on the hook in said user's home, the exchange unit is switched to the center unit to enable the transmission of the broadcast data output by said center unit to the user's home. In practice, a plurality of center units are normally connected to the same exchange unit and the user is able, through the remote operation of his home unit, both to switch the exchange unit and also to select his desired channel from the N number of channels on which said center units transmit data. In this type of system, the speech communication function is given priority such that, whenever either the receiver is lifted off the hook or else there is an incoming voice call, the speech communication function is automatically selected. Similarly, when the receiver is replaced on the hook, the telephone is reconnected with the aforementioned unidirectional communication system.

In a unidirectional communication system, download signals are transmitted in one direction from the system center along an analog telephone line at such times as the subscriber is not using his telephone himself. The system's upload conditions and download conditions are not equivalent, however, in that the subscriber is only able to upload the signals that will enable him to select the channel of his choice from the N number of individual channels to which the center units are set. As a result, the data which is currently on offer from such centers is limited to sound data such as music, which can be allocated to different channels in accordance with genre, for example, and which can easily be transmitted in one direction only. Channel selection itself is achieved by using variations in the voltage arising between the telephone exchange and the telephone receiver as channel selection pulses. More specifically, pulses generated by variations in direct current voltage are used to select channels in such a way that, when a subscriber first switches the power on to his home unit and connects it to the unidirectional communication system, channel No.1 is automatically selected. For this reason, even after a user has made his preferred channel selection from the N number of channels available, if the power is subsequently cut off or if unidirectional transmission is terminated by the receipt of an incoming call signal, the user's channel specification will be rendered ineffective and, when the user's home unit is reconnected to the unidirectional communication system, the channel specification will automatically revert to channel No.1. As a result, the user has the inconvenience of having to reinput his preferred channel specification manually if he wishes to continue listening to the channel that he was listening to before the interruption.

Moreover, as the variety of available data increases, so success in diversifying the functions of a unidirectional communication system would produce a large increase in the range of uses such a system could be put to. To be more specific, if it were possible not simply to provide a unidirectional flow of data on N number of channels, but at the same time to increase the number of types of data that can be transmitted on each channel without at the same time increasing the overall number of channels, this would constitute a quantum leap in the utilization of a unidirectional communication system.

### SUMMARY OF THE INVENTION

The first object of the present invention is the provision of a device for use in an unidirectional communication system, which, in the event that a user wishes to resume listening to an unidirectional communication which has been interrupted for speech communication purposes, for example, will automatically reconnect said user to the channel to which he was listening prior to the interruption without the need for troublesome manual adjustment of the controls.

The second object of the invention is to provide a device which will make use of one of the many channels offered by an unidirectional communication system as a facsimile communication channel for the continuous transmission of different types of facsimile data and which will enable selection, by the manual adjustment of a home unit, only of such types of data as are specifically required.

The ultimate object of this invention is to enhance the efficacy of unidirectional communication systems through the achievement of the first and second objects outlined above.

To achieve the first object, the present invention makes use of a control means which switches between an unidirectional communication function and a telephone function, a memory means which stores the selected channel data and a means for the overall control of the above two means. The use of the present invention can significantly enhance the effectiveness even of a setup as simple as the one outlined above.

In order to achieve the second object, we made use of an unidirectional communication control means which determines whether or not the telephone line is being used for speech communication and, in cases where said line is not being used for speech communication, receives facsimile signals transmitted by said unidirectional communication system. We also made use of a facsimile modem, a memory means to store the required facsimile signals in binary data form, a facsimile signal output device, a facsimile signal input device and a means for the overall control of each of the above items of equipment.

The attached drawings and the detailed description of the invention given below should help amplify the above objects, introduce fresh objects and clarify the advantages and effects of the present invention.

### BRIEF DESCRIPTION OF THE DRAWINGS

Figure 1 is a block diagram showing the preferred embodiment of the channel selector used to attain the first object of the invention.

Figure 2 is a block diagram illustrating the facsimile communication function of the multimedia transmission device used to attain the second object of the invention.

Figure 3 illustrates the typical data structure used for the transmission of more than one type of data on a single channel.

### DETAILED DESCRIPTION OF THE EMBODIMENTS

There follows a description of the preferred embodiments of the invention by reference to the accompanying drawings.

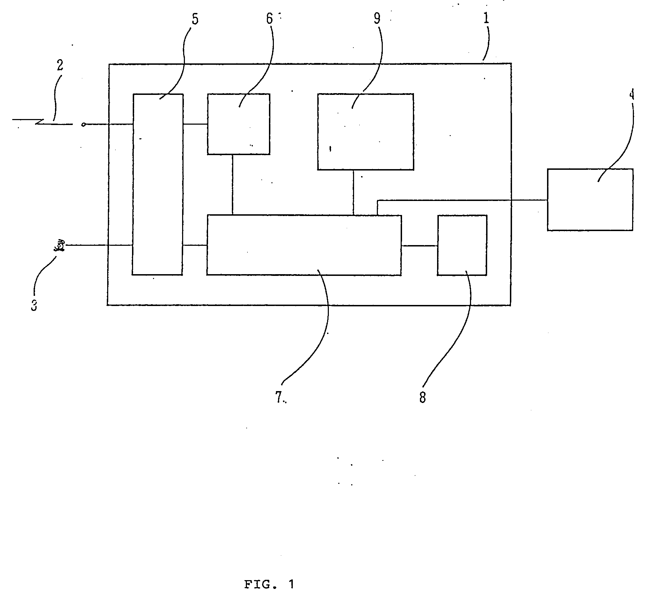

Figure 1 illustrates the configuration of the blocks primarily involved in the achievement of the first object. 1 is a user's terminal, which is connected externally to a telephone line 2 and internally to a telephone set 3. Said terminal 1 also outputs received data to a data processing device 4, such as a reproduction device, positioned further downstream. If the unidirectional communication data received by said data processing device 4 is, for example, digital music signals, then they may, for example, be input by way of a digital sound source into an amplifier in the form of audio data, or they may first be converted by an A/D converter to analog audio signals and then input to an amplifier. If the data being used is not music data, however, but is, for example, visual data, then said data processing device 4 will probably comprise a visual display unit or a hardcopy printer of some sort. Either way, this will not involve a change in the basic configuration of the system.

The internal configuration of the terminal 1 itself includes a unidirectional communication control circuit 5 which incorporates a switching function that enables it, on receipt of a unidirectional communication signal, to connect said control circuit 5 to a modem 6 or, in the event that the telephone 3 receiver is lifted off the hook or on receipt of an external call signal, to connect the aforementioned telephone line 2 to said telephone set 3. 7 is a CPU which controls all the blocks that fall within the scope of the terminal block 1, as illustrated in Figure 1, while at the same time processing unidirectional communication data. 8 is a channel data memory which stores data that indicates which channel is currently being used.

Since it is necessary to preserve the contents of said memory 8 even if the power supply is cut off, this memory 8 should preferably be non-volatile. 9 is a memory for saving unidirectional communication data and which saves the data relating to the currently selected channel by continuously overwriting it. Thus, when a unidirectional communication system is reconnected following a temporary interruption during use or when the channel is changed, the contents of said memory 9 can reproduced first and blank time kept to a minimum.

Up until now the description of the preferred embodiment has involved the assumption that music data will be the type of data to be transmitted by the unidirectional communication system of said preferred embodiment, but this need not be the case. Other types of data including visual data such as characters or data for use in computer games can be handled equally well using the same approach. In this case, however, memory 9 becomes an optional part in the overall configuration.

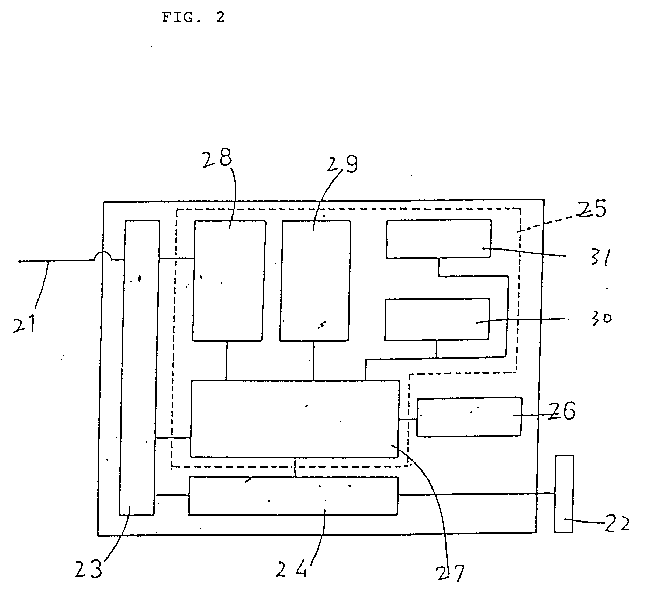

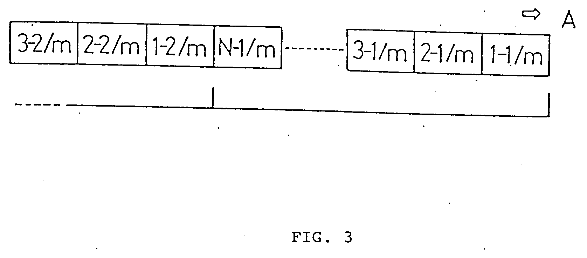

Figure 2 and Figure 3 illustrate the structural features required for the achievement of the second object. Figure 2 illustrates the block configuration of the home unit or, in other words, the terminal which is connected to the telephone in the user's home. In the figure, 21 is a telephone line which is connected by way of a telephone network to a unidirectional communication center unit, 22 is a handset which functions as a telephone and 23 is the unidirectional communication control section. When said handset 22 is lifted off the hook, the change in the voltage being applied to the telephone line is detected and the handset is connected to the telephone function circuit 24.

When the handset 22 is placed on the hook, on the other hand, the change in voltage results in a facsimile circuit 25, which fulfills the unidirectional communication function, being selected instead. In the event that an external call signal is received, this is detected, the unidirectional communication function is disconnected, the telephone function is selected and a ring back tone is generated. 26 is a channel selection circuit which is used to select the required channel from facsimile data output by the unidirectional communication center. The facsimile circuit 25 itself comprises a CPU 27 which controls the user's terminal, a facsimile modem 28, a memory 29 for storing only those signals that are required out of all the signals that are received, an output unit 30 for the display of received facsimile data and an input unit 31 for the input of facsimile data for outgoing transmission. Said output unit 30 includes optional known output means such as a hardcopy printer or a visual display unit. Said input device 31 similarly includes known input means such as an image reader or means whereby the facsimile data can be input from a computer.

Figure 3 illustrates the way in which the facsimile data transmitted from the unidirectional communication center unit is structured. The data shown in the figure represents a set of data divided into m number of blocks in such a way that N types (N channels) of data can be transmitted serially on a single physical channel. The data itself is arranged in order starting at the head of the data string A with block 1 of channel 1, block 1 of channel 2 - - - block 1 of channel N - - - block m of channel 1, block m of channel 2 - - - block m of channel N, and so on. A header which functions as an identification code indicating the channel number and block number plus an error correcting code are also inserted at the head of each block. The use of this structure ensures that all channels are transmitted under equivalent conditions, thereby preventing the development of a speed differential between channels. Data strings of this type are converted to analog signals and then transmitted serially as facsimile signals down the telephone line.

In the configuration described above, when facsimile data is received by means of the unidirectional communication system, the handset 22 is first set to the on-hook position and the unidirectional communication function is then selected. The unidirectional communication control section 23 then selects the specific channel carrying facsimile data from the group of channels assigned to unidirectional communication. At this point, a data string of the type illustrated in Figure 3 is input from the telephone line 21 by way of the unidirectional communication control section 23 to the facsimile modem 28. The whole of the data string is not subjected to any further processing at this point. The channel selection circuit 26 then selects the required channel of data from said data string, which comprises N number of channels of data and, when a predetermined execution instruction is input, said data string is read into the CPU 27 in accordance with a program already stored in said CPU. The headers of each block are then retrieved and those blocks which belong to the specified channel are written into the memory 29. Moreover, if the need arises and an end code has been added into the final block of each channel in the data string, then when this is retrieved, the CPU 27 is able to bring the process of writing data into the memory 29 to an end. Finally, if the output device 30 is a hardcopy printing device, the CPU 27 will read out in block order the data which has been temporarily written into the memory 29 and said data will then be output to the recording paper to complete the sequence of operations. If, on the other hand, the output device 30 is the visual display unit of a computer, for example, then the computer will access the CPU 27 and transmit the contents of the memory 29 to the computer from which they will be output in block order to said visual display unit to complete the sequence of operations.

The CPU 27 and the telephone function circuit 24 are also connected with each other to enable ordinary two-way facsimile communication. When the system is to be used for outgoing facsimile transmission, first the telephone function is selected, then the facsimile data is read in from the input device 31 and subsequently output to the telephone line 21 in response to control instructions from the CPU 27. Similarly, when the device is to be used to receive an incoming facsimile transmission, first the telephone function circuit 24 is selected in response to a call signal and the facsimile signals are then input. When the CPU 27 has determined that the incoming signals are facsimile signals, it immediately inputs them to the facsimile modem 28 from which they are output directly to the output device 30 without recourse to intermediate storage in the memory 29. The device of the present preferred embodiment is thus able to freely choose either to receive facsimile data through the medium of the device's unidirectional communication function or else to transmit or receive facsimile signals through the medium of the device's ordinary telephone function.

For the purposes of the above explanation the two embodiments of the invention represented in Figure 1 on the one hand and in Figures 2 and 3 on the other were kept separate. In practice, however, the two need not be kept separate and it is, in fact, preferable for them to be combined. If the two embodiments are combined to form a single device, the selection circuit in Figure 2 will become unnecessary while the channel memory in Figure 1 will have to be included. Moreover, since the device is to be used for incoming and outgoing facsimile transmission, the input device 31 and the output device 30 in Figure 2 will also have to be incorporated. Using this sort of system design, data indicating the channel on which facsimile data is being transmitted need only be stored in the memory 8 to ensure that, when unidirectional communication is resumed after being interrupted for some reason, the system will be automatically reconnected to the facsimile channel. The adoption of this system configuration will similarly enable the exclusive selection only of such data as is specifically required from the variety of types of data which constitute the facsimile data stream.

Thus, in this embodiment, if the power to the user's terminal is cut or else unidirectional communication is interrupted by use of the telephone for speech communication, then when the unidirectional communication system is restored, the channel which was in use immediately prior to the interruption will automatically be reselected on the basis of the relevant channel data stored in memory, thus dispensing with the need for troublesome manual adjustment. Another significant advantage of this embodiment of the invention is that, since there is also a unidirectional communication data storage memory incorporated into the system to enable the reproduction of data stored in the memory either when the channel is being changed or else when it is being reconnected, it is possible to avoid interruptions or blanks in the reproduction of music which is being used as background music, for example.

Again, the system is designed such that, when facsimile signals are transmitted from a center using the unidirectional communication function, they are first received by the off-talk control section of the user's terminal and then processed by the CPU, with only such data as is specifically required being finally output. Modern systems for unidirectional communication can thus be improved by enabling their use for the receipt of selected facsimile data. One further refinement achieved by this invention involves the structuring of the data itself. More specifically, the data from more than one channel is divided into the form of blocks which are then arranged in order for serial transmission. Each block is further provided with an identification code to enable the selection only of such data as is required simply by specifying the channel. It is in this way possible to use just one of the channels assigned to unidirectional communication for the transmission of more than one channel of data.

## Claims

1. An unidirectional communication system which comprises a plurality of data sources in the form of physical channels, one or other of which may be selected by the operation of an user terminal (1) in order to receive data by unidirectional communication through a telephone line (2;21) and which gives priority to selection of the telephone function during speech communication and restores unidirectional communication on completion of said speech communication, an unidirectional communication system channel selection means (5;23,26) comprising a control circuit (5;23) which switches between said telephone function and said unidirectional communication function, a memory (8;29) which stores the selected channel and a CPU (7;27) which controls the operations of said control circuit (5;23) and said memory (8;29), said channel selection means (5;23,26) being characterized by its automatic selection of the channel stored in said memory (8;29) when reconnecting said unidirectional communication function following an interruption.

2. The unidirectional communication system according to claim 1 wherein said channel selection means further comprises a memory (9) into which data transmitted by unidirectional communication is continuously overwritten and saved, and which reproduces the data held in said memory (9) when the channel is changed or else when unidirectional communication is being reconnected following an interruption.

3. The unidirectional communication system according to claim 1 or claim 2, wherein said channel selection means comprises a non-volatile memory (8) which is used as the channel storage memory.

4. The unidirectional communication system according to anyone of preceding claims to which is connected a data processing means (4) processes data from a channel selected by way of an interface from a CPU(7;27).

5. The unidirectional communication system according to claim 4 in which the data from said selected channel is music data and said data processing means (4) is a music reproduction means.

6. The unidirectional communication system according to claim 4 or 5 in which the data from said selected channel is facsimile data and said data processing means is a facsimile output means (30).

7. The unidirectional communication system according anyone of the preceding claims in which the telephone line (2;21) is an analog line.

8. The unidirectional communication system according anyone of the preceding claims in which the telephone line (2;21) is a digital line.

9. An unidirectional communication system which comprises a plurality of data sources in the form of physical channels, one or other of which may be selected by the operation of a user terminal (1) in order to receive data by unidirectional communication through a telephone line (2;21) and which gives priority to selection of the telephone function during speech communication and restores unidirectional communication on completion of said speech communication, an unidirectional communication system multimedia transmission means which uses at least one of said plurality of channels for the transmission of facsimile data and which comprises an unidirectional communication control section (5;23,26) which receives said unidirectional communication facsimile data at times when the telephone is not in use for speech communication, a facsimile modem (28), an output means (30) for facsimile signals, an input means (31) for facsimile signals and a CPU (7;27) which controls the operations of said unidirectional communication control section (5;23,26), said facsimile modem,(28) said output means (30) for facsimile signals and said input means (31) for facsimile signals.

10. The unidirectional communication system according to claim 9 in which the structure of the facsimile data is obtained by dividing a plurality of types of facsimile data into a plurality of data blocks, by inserting identification codes into each of said blocks and by arranging said blocks in serial order to form a data string,(A) and in which only such data as relates to the channel selected by the channel selection circuit is extracted.

11. The unidirectional communication system according to claim 10 which temporarily stores data from the selected channel in binary form in a buffer memory (29) from which it subsequently reads facsimile data and transfers it to an output means (30).

12. The unidirectional communication system according to anyone of claims 9 to 11 in which the telephone line (2;21) is an analog line.

13. The unidirectional communication system according to anyone of claims 9 to 11 in which the telephone line (2;21) is a digital line.
